(19) **Europäisches Patentamt / European Patent Office / Office européen des brevets**

(11) **EP 2 964 734 B1**

(12) # EUROPEAN PATENT SPECIFICATION

(45) Date of publication and mention
of the grant of the patent:
**02.08.2017 Bulletin 2017/31**

(51) Int Cl.:
***C10L 1/02*** *(2006.01)*

(21) Application number: **14709912.1**

(22) Date of filing: **06.03.2014**

(86) International application number:
**PCT/EP2014/054327**

(87) International publication number:
**WO 2014/135628 (12.09.2014 Gazette 2014/37)**

(54) **USE OF A LUBRICATING COMPOSITION**

VERWENDUNG EINER SCHMIERMITTELZUSAMMENSETZUNG

UTILISATION D'UNE COMPOSITION LUBRIFIANTE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **06.03.2013 US 201361773413 P**

(43) Date of publication of application:
**13.01.2016 Bulletin 2016/02**

(73) Proprietor: **Shell Internationale Research
Maatschappij B.V.
2596 HR The Hague (NL)**

(72) Inventors:
• **MATTHEWS, Sarah Jane
Manchester
Greater Manchester M220RR (GB)**

• **SOUTHBY, Mark Clift
London
Greater London E14 5NR (GB)**
• **XU, Zhou
Katy, Texas 77450 (US)**

(74) Representative: **Matthezing, Robert Maarten
Shell International B.V.
Intellectual Property Services
P.O. Box 384
2501 CJ The Hague (NL)**

(56) References cited:
**DE-A1-102007 046 223    GB-A- 2 446 277
US-A1- 2008 194 443    US-A1- 2011 306 533**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Field of the Invention

The present invention relates to a lubricating composition for particular use in the crankcase of an internal combustion engine, wherein the internal combustion engine is fuelled by biodiesel.

Background of the Invention

Government regulations and market demands continue to emphasize conservation of fossil fuels in the transportation industry. There is therefore an increasing demand for vehicles which are fuelled with fuels from renewable or bio-derived sources.

It is known to include fatty acid alkyl esters (FAAEs), in particular fatty acid methyl esters (FAMEs), in diesel fuel compositions. FAME is produced via a chemical process called transesterification with methanol in the presence of a catalyst to yield methyl esters. FAME can be produced from various oil-derived feedstocks such as soybean, rapeseed, sunflower seed, coconut and used vegetable oils. FAAEs may be added for a variety of reasons, including to reduce the environmental impact of the fuel production and consumption process or to improve lubricity.

However, it has been found that the lubricant compositions used for lubricating an internal combustion engine can often become diluted with the biofuel composition which is used to fuel the engine. In particular, it has been found that dilution of a lubricating composition with a FAAE, such as a FAME, can lead to an undesirable loss in viscosity of the lubricating composition such that the lubricating composition no longer meets a defined viscosity grade and/or no longer provides the lubrication protection for the engine.

US2010/0190671 relates to the use of comb polymers for reducing fuel consumption. In particular, the comb polymer disclosed therein comprises, in the main chain, at least one repeat unit which is obtained from at least one polyolefin-based macromonomer, and at least one repeat unit which is obtained from at least one low molecular weight monomer selected from the group consisting of styrene monomers having 8 to 17 carbon atoms, alkyl(meth)acrylates having 1 to 10 carbon atoms in the alcohol group, vinyl esters having from 1 to 11 carbon atoms in the acyl group, vinyl ethers having 1 to 10 carbon atoms in the alcohol group, (di)alkyl fumurates having 1 to 10 carbon atoms in the alcohol group, (di)alkyl maleates having 1 to 10 carbon atoms in the alcohol group and mixtures thereof, where the molar degree of branching is in the range of 0.1 to 10 mol% and the comb polymer comprises a total of at least 80% by weight, based on the total weight of repeat units of the comb polymer, of the at least one repeat unit which is obtained from the at least one polyolefin-based macromonomer and the at least one repeat unit which is obtained from the at least one low molecular weight monomer. There is no disclosure in US2010/0190671, however, of the use of such comb polymers for providing benefits in terms of reducing viscosity loss of lubricant compositions which have been diluted with FAAE's such as FAMEs.

Summary of the Invention

According to the present invention there is provided the use of a comb polymer for reducing the loss in viscosity at 100°C of a lubricating composition for the crankcase of an internal combustion engine, wherein the internal combustion engine is fuelled with a fuel composition which comprises a fatty acid alkyl ester.

Detailed Description of the Invention

As mentioned above, it is known that a diesel fuel composition used to fuel a compression ignition engine may incorporate a fatty acid alkyl ester (FAAE) such as a fatty acid methyl ester (FAME) as a fuel component. Unfortunately, however, FAME is much less volatile than conventional diesel so has a much higher tendency to accumulate in the lubricant relative to fossil-derived diesel fuel. Consequently, higher levels of FAME in diesel fuel can lead to higher level of fuel dilution in the lubricant, which can lead in turn to an undesirable loss in viscosity of the lubricant.

As used herein, the term "reducing the loss in viscosity" means reducing the loss in viscosity which is experienced when a lubricating composition is diluted with a fatty acid alkyl ester (FAAE) such as a FAME. In a preferred embodiment, the reduction in loss in viscosity is at least a 2% reduction in loss in viscosity, more preferably at least a 5% reduction in loss in viscosity, even more preferably at least a 10% reduction in loss in viscosity.

In a preferred embodiment of the present invention, the viscosity of the lubricating composition is the kinematic viscosity at 100°C as measured according to ASTM D445.

The FAAE will typically be added to the fuel composition as a blend (i.e. a physical mixture), conveniently before the composition is introduced into an internal combustion engine or other system which is to be run on the composition. Other fuel components and/or fuel additives may also be incorporated into the composition, either before or after addition of the FAAE and either before or during use of the composition in a combustion system.

The amount of FAAE added will depend on the nature of the base fuel and FAAE in question and on the target cetane number. In general, the volume fraction v of FAAE in the resultant base fuel/FAAE mixture will be less than the volume fraction v' which would be required if linear blending rules applied, wherein v' would be defined by the equation:

$$X = A + v'(B-A).$$

The volume fractions v and v' must each have a value between 0 and 1. When carrying out the method of the present invention the actual volume fraction of FAAE, v, is preferably at least 0.02 lower than the "linear" volume fraction v', more preferably at least 0.05 or 0.08 or 0.1 lower, most preferably at least 0.2, 0.3 or 0.5 lower and in cases up to 0.6 or 0.8 lower than v'. In absolute terms, the actual volume fraction v is preferably 0.25 or less, more preferably 0.2 or less, yet more preferably 0.15 or 0.1 or 0.07 or less. It may for example be from 0.01 to 0.25, preferably from 0.05 to 0.25, more preferably from 0.05 or 0.1 to 0.2.

The concentration of the FAAE in the overall fuel composition (or at least in the base fuel/FAAE mixture) is preferably 25% v/v or less, more preferably 20% v/v or less, yet more preferably 15 or 10 or 7% v/v or less. As a minimum it may be 0.05% v/v or greater, preferably 1% v/v or greater, more preferably 2% or 5% v/v or greater, most preferably 7 or 10% v/v or greater.

Fatty acid alkyl esters, of which the most commonly used in the present context are the methyl esters, are already known as renewable diesel fuels (so-called "biodiesel" fuels). They contain long chain carboxylic acid molecules (generally from 10 to 22 carbon atoms long), each having an alcohol molecule attached to one end. Organically derived oils such as vegetable oils (including recycled vegetable oils) and animal fats can be subjected to a transesterification process with an alcohol (typically a $C_1$ to $C_5$ alcohol) to form the corresponding fatty esters, typically mono-alkylated. This process, which is suitably either acid- or base-catalysed, such as with the base KOH, converts the triglycerides contained in the oils into fatty acid esters and free glycerol, by separating the fatty acid components of the oils from their glycerol backbone.

In the present invention, the FAAE may be any alkylated fatty acid or mixture of fatty acids. Its fatty acid component(s) are preferably derived from a biological source, more preferably a vegetable source. They may be saturated or unsaturated; if the latter, they may have one or more double bonds. They may be branched or un-branched. Suitably they will have from 10 to 30, more suitably from 10 to 22 or from 12 to 22, carbon atoms in addition to the acid group(s) $-CO_2H$. A FAAE will typically comprise a mixture of different fatty acid esters of different chain lengths, depending on its source. For instance the commonly available rapeseed oil contains mixtures of palmitic acid ($C_{16}$), stearic acid ($C_{18}$), oleic, linoleic and linolenic acids ($C_{18}$, with one, two and three unsaturated carbon-carbon bonds respectively) and sometimes also erucic acid ($C_{22}$) - of these the oleic and linoleic acids form the major proportion. Soybean oil contains a mixture of palmitic, stearic, oleic, linoleic and linolenic acids. Palm oil usually contains a mixture of palmitic, stearic and linoleic acid components.

The FAAE used in the present invention is preferably derived from a natural fatty oil, for instance a vegetable oil such as rapeseed oil, soybean oil, coconut oil, sunflower oil, palm oil, peanut oil, linseed oil, camelina oil, safflower oil, babassu oil, tallow oil or rice bran oil. It may in particular be an alkyl ester (suitably the methyl ester) of rapeseed, soy, coconut or palm oil.

The FAAE is preferably a $C_1$ to $C_5$ alkyl ester, more preferably a methyl, ethyl or propyl (suitably isopropyl) ester, yet more preferably a methyl or ethyl ester and in particular a methyl ester.

It may for example be selected from the group consisting of rapeseed methyl ester (RME, also known as rape oil methyl ester or rape methyl ester), soy methyl ester (SME, also known as soybean methyl ester), palm oil methyl ester (POME), coconut methyl ester (CME) (in particular unrefined CME; the refined product is based on the crude but with some of the higher and lower alkyl chains (typically the $C_6$, $C_8$, $C_{10}$, $C_{16}$ and $C_{,8}$) components removed) and mixtures thereof. In general it may be either natural or synthetic, refined or unrefined ("crude").

The FAAE suitably complies with specifications applying to the rest of the fuel composition, and/or to the base fuel to which it is added, bearing in mind the intended use to which the composition is to be put (for example, in which geographical area and at what time of year). In particular, the FAAE preferably has a flash point (IP 34) of greater than 101°C; a kinematic viscosity at 40°C (IP 71) of 1.9 to 6.0 centistokes, preferably 3.5 to 5.0 centistokes; a density from 845 to 910 kg/m³, preferably from 860 to 900 kg/m³, at 15°C (IP 365, EN ISO 12185 or EN ISO 3675); a water content (IP 386) of less than 500 ppm; a T95 (the temperature at which 95% of the fuel has evaporated, measured according to IP 123) of less than 360°C; an acid number (IP 139) of less than 0.8 mgKOH/g, preferably less than 0.5 mgKOH/g; and an iodine number (IP 84) of less than 125, preferably less than 120 or less than 115, grams of iodine ($I_2$) per 100g of fuel. It also preferably contains (eg, by NMR) less than 0.2% w/w of free methanol, less than 0.02% w/w of free glycerol and greater than 96.5% w/w esters. In general it may be preferred for the FAAE to conform to the European specification EN 14214 for fatty acid methyl esters for use as diesel fuels.

The measured cetane number of the FAAE (ASTM D613) is suitably 55 or greater, preferably 58 or 60 or 65 or even 70 or greater.

Two or more FAAEs may be added to the base fuel in accordance with the present invention, either separately or as a pre-prepared blend, so long as their combined effect is to increase the cetane number of the resultant composition to reach the target number X. In this case the total amount x' of the two or more FAAEs must be less than the amount of that same combination of FAAEs which would need to be added to the base fuel in order to achieve the target cetane number X if linear blending rules applied for both or all of the FAAEs.

The FAAE preferably comprises (i.e. either is or includes) RME or SME.

The FAAE may be added to the fuel composition for one or more other purposes in addition to the desire to increase cetane number, for instance to reduce life cycle greenhouse gas emissions, to improve lubricity and/or to reduce costs.

The lubricating composition herein typically comprises a base oil and one or more additives, in addition to one or more comb polymers.

There are no particular limitations regarding the base oil used in the lubricating compositions herein, and various conventional mineral oils, synthetic oils as well as naturally derived esters such as vegetable oils may be conveniently used.

The base oil used in the present invention may conveniently comprise mixtures of one or more mineral oils and/or one or more synthetic oils; thus, the term "base oil" herein may refer to a blend containing more than one base oil.

Suitable base oils for use in the lubricating oil composition of the present invention are Group I-III mineral base oils (preferably Group III), Group IV poly-alpha olefins (PAOs), Group II-III Fischer-Tropsch derived base oils (preferably Group III), Group V base oils, and mixtures thereof.

By "Group I", "Group II" "Group III" and "Group IV" and "Group V" base oils in the present invention are meant lubricating oil base oils according to the definitions of American Petroleum Institute (API) for categories I, II, III, IV and V. These API categories are defined in API Publication 1509, 15th Edition, Appendix E, April 2002.

Mineral oils include liquid petroleum oils and solvent-treated or acid-treated mineral lubricating oil of the paraffinic, naphthenic, or mixed paraffinic/naphthenic type which may be further refined by hydrofinishing processes and/or dewaxing.

A preferred base oil for use in the lubricating compositions herein is a Fischer-Tropsch derived base oil. Fischer-Tropsch derived base oils are known in the art. By the term "Fischer-Tropsch derived" is meant that a base oil is, or is derived from, a synthesis product of a Fischer-Tropsch process. A Fischer-Tropsch derived base oil may also be referred to as a GTL (Gas-To-Liquids) base oil. Suitable Fischer-Tropsch derived base oils that may be conveniently used as the base oil in the lubricating composition of the present invention are those as for example disclosed in EP 0 776 959, EP 0 668 342, WO 97/21788, WO 00/15736, WO 00/14188, WO 00/14187, WO 00/14183, WO 00/14179, WO 00/08115, WO 99/41332, EP 1 029 029, WO 01/18156 and WO 01/57166.

Typically, the aromatics content of a Fischer-Tropsch derived base oil, suitably determined by ASTM D 4629, will typically be below 1 wt.%, preferably below 0.5 wt.% and more preferably below 0.1 wt.%. Suitably, the base oil has a total paraffin content of at least 80 wt.%, preferably at least 85, more preferably at least 90, yet more preferably at least 95 and most preferably at least 99 wt.%. It suitably has a saturates content (as measured by IP-368) of greater than 98 wt.%. Preferably the saturates content of the base oil is greater than 99 wt.%, more preferably greater than 99.5 wt.%. It further preferably has a maximum n-paraffin content of 0.5 wt.%. The base oil preferably also has a content of naphthenic compounds of from 0 to less than 20 wt.%, more preferably of from 0.5 to 10 wt.%.

Typically, when present in the lubricating compositions herein, the Fischer-Tropsch derived base oil or base oil blend has a kinematic viscosity at 100°C (as measured by ASTM D 7042) in the range of from 1 to 30 mm$^2$/s (cSt), preferably from 1 to 25 mm$^2$/s (cSt), and more preferably from 2 mm$^2$/s to 12 mm$^2$/s. Preferably, the Fischer-Tropsch derived base oil has a kinematic viscosity at 100°C (as measured by ASTM D 7042) of at least 2.5 mm$^2$/s, more preferably at least 3.0 mm$^2$/s. In one embodiment of the present invention, the Fischer-Tropsch derived base oil has a kinematic viscosity at 100°C of at most 5.0 mm$^2$/s, preferably at most 4.5 mm$^2$/s, more preferably at most 4.2 mm$^2$/s (e.g. "GTL 4"). In another embodiment of the present invention, the Fischer-Tropsch derived base oil has a kinematic viscosity at 100°C of at most 8.5 mm$^2$/s, preferably at most 8 mm$^2$/s (e.g. "GTL 8").

Further, the Fischer-Tropsch derived base oil when present in the lubricating composition herein typically has a kinematic viscosity at 40°C (as measured by ASTM D 7042) of from 10 to 100 mm$^2$/s (cSt), preferably from 15 to 50 mm$^2$/s.

Also, a preferred Fischer-Tropsch derived base oil for use herein has a pour point (as measured according to ASTM D 5950) of below -30°C, more preferably below -40°C, and most preferably below -45°C.

The flash point (as measured by ASTM D92) of the Fischer-Tropsch derived base oil is preferably greater than 120°C, more preferably even greater than 140°C.

A preferred Fischer-Tropsch derived base oil for use herein has a viscosity index (according to ASTM D 2270) in the range of from 100 to 200. Preferably, the Fischer-Tropsch derived base oil has a viscosity index of at least 125, preferably 130. Also it is preferred that the viscosity index is below 180, preferably below 150.

In the event the Fischer-Tropsch derived base oil contains a blend of two or more Fischer-Tropsch derived base oils, the above values apply to the blend of the two or more Fischer-Tropsch derived base oils.

The lubricating oil composition herein preferably comprises 80 wt% or greater of Fischer-Tropsch derived base oil.

Synthetic oils include hydrocarbon oils such as olefin oligomers (including polyalphaolefin base oils; PAOs), dibasic acid esters, polyol esters, polyalkylene glycols (PAGs), alkyl naphthalenes and dewaxed waxy isomerates. Synthetic hydrocarbon base oils sold by the Shell Group under the designation "Shell XHVI" (trade mark) may be conveniently used.

Poly-alpha olefin base oils (PAOs) and their manufacture are well known in the art. Preferred poly-alpha olefin base oils that may be used in the lubricating compositions of the present invention may be derived from linear $C_2$ to $C_{32}$, preferably $C_6$ to $C_{16}$, alpha olefins. Particularly preferred feedstocks for said poly-alpha olefins are 1-octene, 1-decene, 1-dodecene and 1-tetradecene.

There is a strong preference for using a Fischer-Tropsch derived base oil over a PAO base oil, in view of the high cost of manufacture of the PAOs. Thus, preferably, the base oil contains more than 50 wt.%, preferably more than 60 wt.%, more preferably more than 70 wt.%, even more preferably more than 80 wt.%. most preferably more than 90 wt.% Fischer-Tropsch derived base oil. In an especially preferred embodiment not more than 5 wt.%, preferably not more than 2 wt.%, of the base oil is not a Fischer-Tropsch derived base oil. It is even more preferred that 100 wt% of the base oil is based on one or more Fischer-Tropsch derived base oils.

The total amount of base oil incorporated in the lubricating composition of the present invention is preferably in the range of from 60 to 99 wt.%, more preferably in the range of from 65 to 90 wt.% and most preferably in the range of from 70 to 85 wt.%, with respect to the total weight of the lubricating composition.

Typically the base oil (or base oil blend) as used according to the present invention has a kinematic viscosity at 100°C (according to ASTM D445) of above 2.5 cSt and up to 8 cSt. According to a preferred embodiment of the present invention the base oil has a kinematic viscosity at 100°C (according to ASTM D445) of between 3.5 and 8 cSt. In the event the base oil contains a blend of two or more base oils, it is preferred that the blend has a kinematic viscosity at 100°C of between 3.5 and 7.5 cSt.

The lubricating composition herein preferably has a Noack volatility (according to ASTM D 5800) of below 15 wt.%. Typically, the Noack volatility (according to ASTM D 5800) of the composition is between 1 and 15 wt.%, preferably below 14.6 wt.% and more preferably below 14.0 wit.%.

The lubricating composition herein comprises one or more comb polymers, preferably in a solid polymer amount of from 0.1 wt% to 10 wt%, more preferably from 0.25 wt% to 7 wt%, and even more preferably from 0.5 wt% to 4 wt%, and especially from 0.5 wt% to 2 wt%, by weight of the total lubricating composition.

The comb polymer is used herein preferably as a VI Improver.

Preferably for use herein the comb polymer comprises, in the main chain, at least one repeat unit which is obtained from at least one polyolefin-based macromonomer, and at least one repeat unit which is obtained from at least one low molecular weight monomer selected from the group consisting of styrene monomers having 8 to 17 carbon atoms, alkyl(meth)acrylates having 1 to 10 carbon atoms in the alcohol group, vinyl esters having from 1 to 11 carbon atoms in the acyl group, vinyl ethers having 1 to 10 carbon atoms in the alcohol group, (di)alkyl fumurates having 1 to 10 carbon atoms in the alcohol group, (di)alkyl maleates having 1 to 10 carbon atoms in the alcohol group and mixtures thereof, where the molar degree of branching is in the range of 0.1 to 10 mol% and the comb polymer comprises a total of at least 80% by weight, based on the total weight of repeat units of the comb polymer, (or in another aspect based on the total weight of the comb polymer), of the at least one repeat unit which is obtained from the at least one polyolefin-based macromonomer and the at least one repeat unit which is obtained from the at least one low molecular weight monomer.

Preferably, the comb polymer used herein has 8% to 30% by weight of repeat units which are derived from polyolefin-based macromonomers, and the molar degree of branching of the comb polymer is in the range of 0.3% to 1.1%.

The term "comb polymer" as used herein means that relatively long side chains are bonded to a polymeric main chain, frequently also known as the backbone. The comb polymers used in the present invention have at least one repeat unit which is derived from polyolefin-based macromonomers. The term "main chain" as used herein does not necessarily mean that the chain length of the main chain is greater than that of the side chains. Instead, this term relates to the composition of this chain. While the side chain has very high proportions of olefinic repeat units, especially units which are derived from alkenes or alkadienes, for example ethylene, propylene, n-butene, isobutene, butadiene, isoprene, the main chain comprises relatively large proportions of polar unsaturated monomers which have been detailed above.

The term "repeat unit" is known to those skilled in the art. The present comb polymers can be obtained by a process which involves the free-radical polymerisation of macromonomers and low molecular weight monomers, wherein double bonds are opened up to form covalent bonds. Accordingly, the repeat unit arises from the monomers used. However, the comb polymers can also be prepared by polymer-analagous reactions and graft copolymerisation. In this case, the converted repeat unit of the main chain is counted as a repeat unit which is derived from a polyolefin-based macromonomer.

Further details of preparation methods of the comb polymers use herein can be found in US2010/0190671 and US2008/0194443.

The comb polymers used in the present invention comprise repeat units which are derived from polyolefin-based macromonomers. These repeat units comprise are least one group which is derived from polyolefins. Examples of suitable polyolefins include C2-C10 alkenes, such as ethylene, propylene, n-butene, isobutene, norbornene, and/or C4-C10 alkadienes such as butadiene, isoprene, norbornadiene, and the like.

The repeat units derived from polyolefin-based macromonomers preferably comprise at least 70% by weight and more preferably at least 80% by weight and most preferably at least 90% by weight of groups which are derived from alkene and/or alkadienes, based on the weight of the repeat units derived from polyolefin-based macromonomers.

The polymeric groups may also be present in hydrogenated form. In addition to the groups which are derived from alkenes and/or alkadienes, the repeat units derived from polyolefin-based macromonomers may comprise further groups. These include small proportions of copolymerizable monomers, including among others, alkyl (meth)acrylates, styrene monomers, fumurates, maleates, vinyl esters and/or vinyl ethers. The proportion of these groups based on copolymerizable monomers is preferably at most 30% by weight, more preferably at most 15% by weight, based on the weight of the repeat units derived from polyolefin-based macromonomers. The repeat units derived from polyolefin-based macromonomers may comprise start groups and/or end groups which serve from functionalization or are caused by the preparation of the repeat units derived from polyolefin-based macromonomers. The proportion of these start groups and/or end groups is preferably at most 30% by weight, more preferably at most 15% by weight, based on the weight of the repeat units derived from polyolefin-based macromonomers.

The number-average molecular weight of the repeat units which are derived from polyolefin-based macromonomers is preferably in the range from 500 to 50000g/mol, more preferably from 700 to 10000g/mol, even more preferably from 1500 to 4900 g/mol and most preferably from 2000 to 3000 g/mol.

The melting point of the repeat units derived from the polyolefin-based macromonomers is preferably less than or equal to -10°C, more preferably less than or equal to -20°C, even more preferably less than or equal to -40°C, as measured by DSC. Most preferably, no DSC melting point can be measured for the repeat units derived from the polyolefin-based macromonomers.

In addition to the repeat units which are derived from the polyolefin-based macromonomers, the comb polymers used in the present invention comprise repeat units which are derived from low molecular weight monomers selected from the group consisting of styrene monomers having 8 to 17 carbon atoms, alkyl(meth)acrylates having 1 to 10 carbon atoms in the alcohol group, vinyl esters having 1 to 11 carbon atoms in the acyl group, vinyl ethers having 1 to 10 carbon atoms in the alcohol group, di(alkyl) fumurates having 1 to 10 carbon atoms in the alcohol group, (di)alkyl maleates having 1 to 10 carbon atoms in the alcohol group, and mixtures of these monomers.

The molecular weight of the low molecular weight repeat units or of the low molecular weight monomers is preferably at most 400g/mol, more preferably at most 200 g/mol and most preferably at most 150g/mol.

Examples of styrene monomers having 8 to 17 carbon atoms are styrene, substituted styrenes having an alkyl substituent in the side chain, for example, alpha-methylstyrene and alpha-ethyl-styrene, substituted styrenes having an alkyl substituent on the ring, such as vinyltoluene p-methylstyrene, halogenated styrenes, for example monochlorostyrenes, dichlorostyrenes, tribromostyrenes, and tetrabromostyrenes.

The term "(meth)acrylates" encompasses acrylates and methacrylates, and also mixtures of acrylates and methacrylates. The alkyl (meth)acrylates having 1 to 10 carbon atoms in the alcohol group include (meth)acrylates which derived from saturated alcohols, such as methyl(meth)acrylate, ethyl(meth)acrylate, n-propyl(meth)acrylate, isopropyl(meth)acrylate, n-butyl(meth)acrylate, tert-butyl(meth)acrylate, pentyl(meth)acrylate, hexyl(meth)acrylate, 2-ethylhexyl(meth)acrylate, heptyl(meth)acrylate, 2-tert-butylheptyl(meth)acrylate, octyl(meth)acrylate, 3-isopropylheptyl(meth)acrylate, nonyl(meth)acrylate, decyl(meth)acrylate; (meth)acrylates which derive from unsaturated alcohols, for example 2-propynyl (meth)acrylate, allyl(meth)acrylate, vinyl(meth)acrylate, oleyl(meth(acrylate; cycloalkyl(meth(acrylates such as cyclpentyl(meth)acrylate, and 3-vinylcyclohexyl(meth)acrylate.

Preferred alkyl(meth)acrylates include 1 to 8, more preferably 1 to 4 carbon atoms in the alcohol group. The alcohol group here may be linear or branched.

Examples of vinyl esters having 1 to 11 carbon atoms in the acyl group include vinyl formate, vinyl acetate, vinyl propionate, vinyl butyrate. Preferred vinyl esters include 2 to 9, more preferably 2 to 5 carbon atoms in the acyl group. The acyl group may be linear or branched.

Examples of vinyl ethers having 1 to 10 carbon atoms in the alcohol group include vinyl methyl ether, vinyl ethyl ether, vinyl propyl ether, vinyl butyl ether. Preferred vinyl ethers include 1 to 8, more preferably 1 to 4 carbon atoms in the alcohol group. The alcohol group may be linear or branched.

The term "(di)ester" as used herein means that monoesters, diesters and mixtures of esters, especially of fumaric acid and/or of maleic acid may be used. The (di) alkyl fumurates having 1 to 10 carbon atoms in the alcohol group include monomethyl fumurate, dimethyl fumurate, monoethyl fumurate, diethyl fumurate, methyl ethyl fumurate, monobutyl fumurate, dibutyl fumurate, dipentyl fumurate and dihexyl fumurate. Preferred (di)alkyl fumurates comprise 1 to 8, more preferably 1 to 4, carbon atoms in the alcohol group. The alcohol group may be linear or branched.

The di(alkyl) maleates having 1 to 10 carbon atoms in the alcohol group include monomethyl maleate, dimethyl maleate, monoethyl maleate, diethyl maleate, methyl ethyl maleate, monobutyl maleate, dibutyl maleate. Preferred (di)alkyl maleates comprise 1 to 8, more preferably 1 to 4 carbon atoms in the alcohol group. The alcohol group herein may be linear or branched.

In addition to the repeat units detailed above, the comb polymers used herein may comprise further repeat units which are derived from further comonomers, their proportion being at most 20% by weight, preferably at most 10% by weight and more preferably at most 5% by weight, based on the weight of the repeat units.

These also include repeat units which are derived from alkyl(meth)acrylates having 11 to 30 carbon atoms in the alcohol group, especially undecyl(meth)acrylate, 5-methylundecyl(meth)acrylate, dodecyl(meth)acrylate, 2-methyldodecyl(meth)acrylate, tridecyl(meth)acrylate, 5-methyltridecyl(meth)acrylate, tetradecyl(meth)acrylate, pentadecyl(meth)acrylate, hexadecyl(meth)acrylate, 2-methylhexadecyl(meth)acrylate, heptadecyl(meth)acrylate, 5-isopropylheptadecyl(meth)acrylate, 4-tert-butyloctadecyl(meth)acrylate, 5-ethyloctadecyl(meth)acrylate, 3-isopropyloctadecyl(meth)acrylate, octadecyl(meth)acrylate, nonadecyl(meth)acrylate, eicosyl(meth)acrylate, cetyleicosyl(meth)acrylate, stearyleicosyl(meth)acrylate, docosyl(meth)acrylate and/or eicosyltetratriacontyl(meth)acrylate.

The comb polymers used herein have a molar degree of branching in the range of from 0.1 to 10 mol%, more preferably from 0.3 to 6 mol%, even more preferably from 0.3 to 1.1 mol%, especially from 0.4 to 1.0 mol% and most preferably from 0.4 to 0.6 mol%. Details of how the molar degree of branching is calculated can be found in US2010/0190671 and US2008/0194443.

The comb polymer used herein preferably has 8 to 30% by weight, more preferably 10 to 26% by weight, of repeat units which are derived from polyolefin-based macromonomers, based on the total weight of the repeat units. Comb polymers for use herein include those which have a weight average molecular weight Mw in the range 100,000 to 500,000 g/mol and most preferably 150,000 to 450,000 g/mol.

The number-average molecular weight Mn, may preferably be in the range of 20,000 to 800,000 g/mol, more preferably 40,000 to 200,000 g/mol and most preferably 50,000 to 150,000 g/mol.

Preferably the comb polymers used herein have a polydipersity index Mw/Mn in the range of 1 to 5, more preferably in the range of from 2.5 to 4.5. The number average and the weight average molecular weight can be determined by known processes such as Gas Permeation Chromatography (GPC).

In a preferred embodiment herein the comb polymer has repeat units which are derived from n-butyl methacrylate and/or from n-butyl acrylate. Preferably, the proportion of repeat units which are derived from n-butyl methacrylate and/or from n-butyl acrylate is at least 50% by weight, more preferably at least 60% by weight, based on the total weight of repeat units.

In a preferred embodiment herein the comb polymer has repeat units which are derived from styrene. The proportion of repeat units which are derived from styrene are preferably in the range of 0.1 to 30% by weight, more preferably 5 to 25% by weight.

In a preferred embodiment herein, the comb polymers have repeat units which are derived from alkyl(meth)acrylate having 11-30 carbon atoms in the alkyl radical, preferably in an amount in the range of 0.1% to 15% by weight, more preferably in the range of 1 to 10% by weight.

In a preferred embodiment herein the comb polymer has repeat units which are derived from styrene and repeat units which are derived from n-butyl methacrylate. The weight ratio of styrene repeat units and n-butylmethacrylate repeat units is preferably in the range of 1:1 to 1:9, more preferably 1:2 to 1:8.

In another preferred embodiment, the comb polymer has repeat units which are derived from methyl methacrylate and repeat units which are derived from n-butyl methacrylate in a weight ratio of 1:1 to 0:100, more preferably 3:7 to 0:100.

A commercially available comb polymer suitable for use herein is available from Evonik under the tradename Viscoplex 3-201.

The lubricating composition herein further comprises one or more additives such as anti-oxidants, anti-wear additives, dispersants, detergents, overbased detergents, extreme pressure additives, friction modifiers, viscosity index improvers, pour point depressants, metal passivators, corrosion inhibitors, demulsifiers, anti-foam agents, seal compatibility agents and additive diluent base oils, etc.

As the person skilled in the art is familiar with the above and other additives, these are not further discussed here in detail. Specific examples of such additives are described in for example Kirk-Othmer Encyclopedia of Chemical Technology, third edition, volume 14, pages 477-526.

Anti-oxidants that may be conveniently used include phenyl-naphthylamines (such as "IRGANOX L-06" available from Ciba Specialty Chemicals) and diphenylamines (such as "IRGANOX L-57" available from Ciba Specialty Chemicals) as e.g. disclosed in WO 2007/045629 and EP 1 058 720 B1, phenolic anti-oxidants, etc.

Anti-wear additives that may be conveniently used include zinc-containing compounds such as zinc dithiophosphate compounds selected from zinc dialkyl-, diaryl- and/or alkylaryl- dithiophosphates, molybdenum-containing compounds, boron-containing compounds and ashless anti-wear additives such as substituted or unsubstituted thiophosphoric acids, and salts thereof.

Examples of such molybdenum-containing compounds may conveniently include molybdenum dithiocarbamates, trinuclear molybdenum compounds, for example as described in WO 98/26030, sulphides of molybdenum and molybdenum dithiophosphate.

Boron-containing compounds that may be conveniently used include borate esters, borated fatty amines, borated epoxides, alkali metal (or mixed alkali metal or alkaline earth metal) borates and borated overbased metal salts.

The dispersant used is preferably an ashless dispersant. Suitable examples of ashless dispersants are polybutylene succinimide polyamines and Mannich base type dispersants.

The detergent used is preferably an overbased detergent or detergent mixture containing e.g. salicylate, sulphonate and/or phenate-type detergents.

Examples of viscosity index improvers, in addition to the one or more comb polymers, which may conveniently be used in the lubricating composition of the present invention include the styrene-butadiene stellate copolymers, styrene-isoprene stellate copolymers and the polymethacrylate copolymer and ethylene-propylene copolymers (also known as olefin copolymers) of the crystalline and non-crystalline type. Dispersant-viscosity index improvers may be used in the lubricating composition of the present invention. However, preferably the composition according to the present invention contains less than 1.0 wt.%, preferably less than 0.5 wt.%, of a Viscosity Index improver concentrate (i.e. VI improver plus "carrier oil" or "diluent"), based on the total weight of the composition. Most preferably, the composition is free of Viscosity Index improver concentrate. The term "Viscosity Modifier" as used hereafter (such as in Table 2) is meant to be the same as the above-mentioned term "Viscosity Index improver concentrate".

Preferably, the composition contains at least 0.1 wt.% of a pour point depressant. As an example, alkylated naphthalene and phenolic polymers, polymethacrylates, maleate/fumarate copolymer esters may be conveniently used as effective pour point depressants. Preferably not more than 0.3 wt.% of the pour point depressant is used.

Furthermore, compounds such as alkenyl succinic acid or ester moieties thereof, benzotriazole-based compounds and thiodiazole-based compounds may be conveniently used in the lubricating composition herein as corrosion inhibitors.

Compounds such as polysiloxanes, dimethyl polycyclohexane and polyacrylates may be conveniently used in the lubricating composition herein as defoaming agents.

Compounds which may be conveniently used in the lubricating composition herein as seal fix or seal compatibility agents include, for example, commercially available aromatic esters.

The lubricating compositions herein may be conveniently prepared by admixing the comb polymer with the base oil(s), and one or more additives.

The above-mentioned additives are typically present in an amount in the range of from 0.01 to 35.0 wt.%, based on the total weight of the lubricating composition, preferably in an amount in the range of from 0.05 to 25.0 wt.%, more preferably from 1.0 to 20.0 wt.%, based on the total weight of the lubricating composition.

Preferably, the composition contains at least 8.0 wt.%, preferably at least 10.0 wt.%, more preferably at least 11.0 wt% of an additive package comprising an anti-wear additive, a metal detergent, an ashless dispersant, an anti-oxidant, a friction modifier and an anti-foaming agent.

The lubricating compositions herein may be so-called "low SAPS" (SAPS = sulphated ash, phosphorus and sulphur), "mid SAPS" or "regular SAPS" formulations.

For Passenger Car Motor Oil (PCMO) engine oils the above ranges mean:

- a sulphated ash content (according to ASTM D 874) of up to 0.5 wt.%, up to 0.8 wt.% and up to 1.5 wt.%, respectively;
- a phosphorus content (according to ASTM D 5185) of up to 0.05 wt.%, up to 0.08 wt.% and typically up to 0.1 wt.%, respectively; and
- a sulphur content (according to ASTM D 5185) of up to 0.2 wt.%, up to 0.3 wt.% and typically up to 0.5 wt.%, respectively.

For Heavy Duty Diesel Engine Oils the above ranges mean:

- a sulphated ash content (according to ASTM D 874) of up to 1 wt.%, up to 1 wt.% and up to 2 wt.%, respectively;
- a phosphorus content (according to ASTM D 5185) of up to 0.08 wt.% (low SAPS) and up to 0.12 wt.% (mid SAPS), respectively; and
- a sulphur content (according to ASTM D 5185) of up to 0.3 wt.% (low SAPS) and up to 0.4 wt.% (mid SAPS), respectively.

The present invention is described below with reference to the following Examples, which are not intended to limit the scope of the present invention in any way.

Examples

Lubricating Oil Compositions

Various engine oils for use in a crankcase engine were formulated.

Table 1 indicates the properties for the base oils used. Table 2 indicates the composition and properties of the fully formulated engine oil formulations that were tested; the amounts of the components are given in wt.%, based on the total weight of the fully formulated formulations.

"Base oil 1" was a Fischer-Tropsch derived base oil ("GTL 4") having a kinematic viscosity at 100°C (ASTM D445) of approx. 4 cSt ($mm^2s^{-1}$). This GTL 4 base oil may be conveniently manufactured by the process described in e.g. WO 02/070631.

"Base oil 2" was a Fischer-Tropsch derived base oil ("GTL 8") having a kinematic viscosity at 100°C (ASTM D445) of approx. 8 cSt ($mm^2s^{-1}$). This GTL 8 base oil may be conveniently manufactured by the process described in e.g. WO 02/070631.

All tested engine oil formulations contained a combination of a base oil, a comb polymer (or other Viscosity Modifier in the case of the Comparative Examples) and an additive package. The additive package was the same in all tested compositions.

The additive package contained a combination of additives including anti-oxidants, a zinc-based anti-wear additive, an ashless dispersant, an overbased detergent mixture and about 10 ppm of an anti-foaming agent.

The comb polymer used in Examples 1,2 and 3 was a commercially available comb polymer available from Evonik under the tradename "Viscoplex 3-201".

The viscosity modifier used in Comparative Examples 1, 4 and 7 was Viscoplex 8-200 which is a conventional PMA (polymethacrylate) polymer commercially available from Evonik.

The viscosity modifier used in Comparative Example 2, 5 and 8 was a conventional olefin copolymer available from Lubrizol under the tradename Lubrizol 7067C.

The viscosity modifier used in Comparative Example 3, 6 and 9 was a functionalised PMA (polymethacrylate) polymer available from Evonik under the tradename Viscoplex 6-054.

The compositions of the Examples and the Comparative Examples were obtained by mixing the base oils with the other components, using conventional lubricant blending procedures.

The kinematic viscosity of 100°C of each of the lubricating compositions of the Examples and Comparative Examples was measured according to ASTM D445. The results of these measurements are shown in Tables 2, 4 and 6.

In order to show the effect that each of the viscosity modifiers have on product viscosity when the lubricating composition is diluted with FAME, each of the compositions was diluted with FAME (at a blending ratio of 80 wt% lubricating composition : 20wt% FAME) and then the kinematic viscosity at 100°C of each of the diluted lubricating compositions was measured according to ASTM D445. The results of these tests are shown in Tables 3, 5 and 7.

Table 1

| | Base oil 1 (GTL 4) | Base oil 2 (GTL 8) |
|---|---|---|
| Kinematic viscosity at 100°C[1] [cSt] | 4.0 | 8 |
| VI Index[2] | 120 | 120 |
| Pour point[3] [°C] | -30 | -30 |
| Noack volatility[4] [wt.%] | 14.0 | 5 |
| [1]According to ASTM D 445. Average figures quoted [2]According to ASTM D 2270. Minimum values quoted. [3]According to ASTM D 5950. Maximum values quoted. [4]According to CEC L-40-A-93 / ASTM D 5800. Maximum values quoted | | |

Table 2

| Component [wt.%] | Comp. Example 1 | Comp. Example 2 | Example 1 | Comp. Example. 3 |
|---|---|---|---|---|
| Base oil 1 (GTL 4) | 10.48 | 73.5 | 10.09 | 16.41 |
| Base oil 2 (GTL 8) | 76.0 | 6.7 | 73.81 | 69.73 |
| Viscoplex 8-200 (polymer treat rate = 1 wit%) | 1.42 | - | - | - |
| Lubrizol 7067C (polymer treat rate = 1 wit%) | - | 7.7 | - | - |
| Viscoplex 3-201 (polymer treat rate = 1 wt%) | - | - | 4.0 | - |
| Viscoplex 6-054 (polymer treat rate = 1 wit%) | - | - | - | 1.76 |
| Additive Package | 12.1 | 12.1 | 12.1 | 12.1 |
| TOTAL | 100 | 100 | 100 | 100 |
| Properties of the total composition | | | | |
| Kinematic viscosity at 100°C[1] [cSt] | 9.495 | 9.579 | 9.561 | 9.498 |

[1]ccording to ASTM D 445
[2]The compositions shown in Table 2 were formulated such that the polymer treat rates were the same (1 wt%) and such that the kV100 of the compositions were approximately the same.

Table 3

| Component [wt.%] | Comp. Example 1 | Comp. Example 2 | Example 1 | Comp. Example. 3 |
|---|---|---|---|---|
| Wt% finished lubricant | 80 | 80 | 80 | 80 |
| Wit% FAME | 20 | 20 | 20 | 20 |
| TOTAL | 100 | 100 | 100 | 100 |
| Properties of the total composition | | | | |
| Kinematic viscosity at 100°C[1] [cSt] | 6.414 | 6.608 | 6.956 | 6.426 |
| Drop in kV100 after adding FAME | 3.081 | 2.971 | 2.605 | 3.072 |
| kV100 drop percentage | 32.4% | 31.0% | 27.2% | 32.3% |

[1]According to ASTM D 445

Table 4

| Component [wt.%] | Comp. Example 4 | Comp. Example 5 | Example 2 | Comp. Example. 6 |
|---|---|---|---|---|
| Base oil 1 (GTL 4) | 3.18 | 34.92 | 2.95 | 6.52 |
| Base oil 2 (GTL 8) | 84.01 | 49.13 | 82.95 | 80.5 |
| Viscoplex 8-200 (polymer treat rate = 0.5 wt%) | 0.71 | - | - | - |
| Lubrizol 7067C (polymer treat rate = 0.5 wt%) | - | 3.85 | - | - |

(continued)

| Component [wt.%] | Comp. Example 4 | Comp. Example 5 | Example 2 | Comp. Example. 6 |
|---|---|---|---|---|
| Viscoplex 3-201 (polymer treat rate = 0.5 wit%) | - | - | 2.0 | - |
| Viscoplex 6-054 (polymer treat rate = 0.5 wt%) | - | - | - | 0.88 |
| Additive Package | 12.1 | 12.1 | 12.1 | 12.1 |
| TOTAL | 100 | 100 | 100 | 100 |
| Properties of the total composition | | | | |
| Kinematic viscosity at 100°C[1] [cSt] | 9.623 | 9.608 | 9.625 | 9.599 |
| [1]According to ASTM D 445<br>[2]The compositions shown in Table 4 were formulated such that the polymer treat rates were the same (0.5 wt%) and such that the kV100 of the compositions were approximately the same. | | | | |

Table 5

| Component [wit.%] | Comp. Example 4 | Comp. Example 5 | Example 2 | Comp. Example. 6 |
|---|---|---|---|---|
| Wt% finished lubricant | 80 | 80 | 80 | 80 |
| Wt% FAME | 20 | 20 | 20 | 20 |
| TOTAL | 100 | 100 | 100 | 100 |
| Properties of the total composition | | | | |
| Kinematic viscosity at 100°C[1] [cSt] | 6.426 | 6.485 | 6.678 | 6.419 |
| Drop in kV100 after adding FAME | 3.197 | 3.123 | 2.947 | 6.419 |
| kV100 drop percentage | 33.20 | 32.5% | 30.6% | 33.1% |
| [1]According to ASTM D 445 | | | | |

Table 6

| Component [wit.%] | Comp. Example 7 | Comp. Example 8 | Example 3 | Comp. Example. 9 |
|---|---|---|---|---|
| Base oil 1 (GTL 4) | 17.42 | 75.79 | 16.83 | 26.32 |
| Base oil 2 (GTL 8) | 68.35 | 0.56 | 65.07 | 58.94 |
| Viscoplex 8-200 (polymer treat rate = 1.5 wt%) | 2.13 | - | - | - |
| Lubrizol 7067C (polymer treat rate = 1.5 wt%) | - | 11.55 | - | - |
| Viscoplex 3-201 (polymer treat rate = 1.5 wt%) | - | - | 6.0 | - |
| Viscoplex 6-054 (polymer treat rate = 1.5 wt%) | - | - | - | 2.64 |
| Additive package | 12.1 | 12.1 | 12.1 | 12.1 |
| TOTAL | 100 | 100 | 100 | 100 |
| Properties of the total composition | | | | |

(continued)

| Component [wit.%] | Comp. Example 7 | Comp. Example 8 | Example 3 | Comp. Example. 9 |
|---|---|---|---|---|
| Kinematic viscosity at 100°C[1] [cSt] | 9.346 | 11.81 | 9.615 | 9.359 |

[1]According to ASTM D 445
[2]The compositions shown in Table 6 were formulated such that the polymer treat rates were the same (1.5 wt%) and such that the kV100 of the compositions were approximately the same.

Table 7

| Component [wit.%] | Comp. Example 7 | Comp. Example 8 | Example 3 | Comp. Example. 9 |
|---|---|---|---|---|
| Wt% finished lubricant | 80 | 80 | 80 | 80 |
| Wt% FAME | 20 | 20 | 20 | 20 |
| TOTAL | 100 | 100 | 100 | 100 |
| Properties of the total composition | | | | |
| Kinematic viscosity at 100°C[1] [cSt] | 6.371 | 7.896 | 7.422 | 6.393 |
| Drop in kV100 after adding FAME | 2.975 | 3.914 | 2.193 | 2.966 |
| kV100 drop percentage | 31.80 | 33.1% | 22.80 | 31.70 |
| [1] According to ASTM D 445 | | | | |

Discussion

The results in Tables 3, 5 and 7 demonstrate that the use of a comb polymer (Viscoplex 3-201) at a treat rate of 1 wt%, 0.5 wt% and 1.5 wt% in a lubricating composition reduces the % loss in kinematic viscosity at 100°C when the lubricating composition is diluted with 20 wt% FAME. The Viscoplex 3-201 comb polymer reduces the % loss in kinematic viscosity at 100°C to a greater extent than other (non-comb) viscosity modifier polymers tested, namely Viscoplex 8-200, Lubrizol 7607C and Viscoplex 6-054.

In particular, Example 1 (containing 1 wt% of the comb polymer Viscoplex 3-201) exhibited a 27.2% loss in kinematic viscosity at 100°C when diluted with 20 wt% of FAME. By comparison, Comparative Example 1 (containing 1 wt% of a conventional polymethacrylate polymer (Viscoplex 8-200)) exhibited a 32.4% loss in kinematic viscosity at 100°C when diluted with 20 wt% of FAME. Further, Comparative Example 2 (containing a conventional olefin copolymer (Lubrizol 7067C) exhibits a 31% loss in kinematic viscosity at 100°C when diluted with 20 wt% of FAME. Yet further, Comparative Example 3 (containing a functionalised polymethacrylate polymer (Viscoplex 6-054) exhibits a 32.3% loss in kinematic viscosity at 100°C when diluted with 20 wt% FAME.

Further, Example 2 (containing 0.5 wt% of the comb polymer Viscoplex 3-201) exhibited a 30.6% loss in kinematic viscosity at 100°C when diluted with 20 wt% of FAME. By comparison, Comparative Example 4 (containing 0.5 wt% of a conventional polymethacrylate polymer (Viscoplex 8-200)) exhibited a 33.2% loss in kinematic viscosity at 100°C when diluted with 20 wt% of FAME. Further, Comparative Example 5 (containing a conventional olefin copolymer (Lubrizol 7067C) exhibits a 32.5% loss in kinematic viscosity at 100°C when diluted with 20 wt% of FAME. Yet further, Comparative Example 6 (containing a functionalised polymethacrylate polymer (Viscoplex 6-054) exhibits a 33.1% loss in kinematic viscosity at 100°C when diluted with 20 wt% FAME.

Further, Example 3 (containing 1.5 wt% of the comb polymer Viscoplex 3-201) exhibited a 22.8% loss in kinematic viscosity at 100°C when diluted with 20 wt% of FAME. By comparison, Comparative Example 7 (containing 1.5 wt% of a conventional polymethacrylate polymer (Viscoplex 8-200)) exhibited a 31.8% loss in kinematic viscosity at 100°C when diluted with 20 wt% of FAME. Further, Comparative Example 8 (containing a conventional olefin copolymer (Lubrizol 7067C) exhibits a 33.1% loss in kinematic viscosity at 100°C when diluted with 20 wt% of FAME. Yet further, Comparative Example 9 (containing a functionalised polymethacrylate polymer (Viscoplex 6-054) exhibits a 31.7% loss in kinematic viscosity at 100°C when diluted with 20 wt% FAME.

**Claims**

1. Use of a comb polymer for reducing the loss in viscosity of a lubricating composition for the crankcase of an internal combustion engine, wherein the internal combustion engine is fuelled with a fuel composition which comprises a fatty acid alkyl ester,
   wherein the comb polymer comprises, in the main chain, at least one repeat unit which is obtained from at least one polyolefin-based macromonomer, and at least one repeat unit which is obtained from at least one low molecular weight monomer selected from the group consisting of styrene monomers having 8 to 17 carbon atoms, alkyl(meth)acrylates having 1 to 10 carbon atoms in the alcohol group, vinyl esters having from 1 to 11 carbon atoms in the acyl group, vinyl ethers having 1 to 10 carbon atoms in the alcohol group, (di)alkyl fumarates having 1 to 10 carbon atoms in the alcohol group, (di)alkyl maleates having 1 to 10 carbon atoms in the alcohol group and mixtures thereof,
   wherein the molar degree of branching is in the range of 0.1 to 10 mol%;
   wherein the comb polymer comprises a total of at least 80% by weight, based on the total weight of repeat units of the comb polymer, of the at least one repeat unit which is obtained from the at least one polyolefin-based macromonomer and the at least one repeat unit which is obtained from the at least one low molecular weight monomer;
   wherein the comb polymer has a weight-average molecular weight in the range of 100,000 to 500,000 g/mol;
   wherein the molar degree of branching, $f_{branch}$, is calculated by the formula:

$$f\text{ branch} = \frac{\sum\limits_{a=1}^{A} n_a}{\sum\limits_{a=1}^{A} n_a + \sum\limits_{b=1}^{B} n_b}$$

where 'A' is the number of types of repeat units which are derived from polyolefin-based macromonomers; where 'B' is the number of types of repeat units which are derived from low molecular weight monomers selected from the group consisting of styrene monomers having from 8 to 17 carbon atoms, alkyl(meth)acrylates having from 1 to 10 carbon atoms in the alcohol group, vinyl esters having from 1 to 11 carbon atoms in the acyl group, vinyl ethers having from 1 to 10 carbon atoms in the alcohol group, (di)alkyl fumarates having from 1 to 10 carbon atoms in the alcohol group, (di)alkyl maleates having from 1 to 10 carbon atoms in the alcohol group, and mixtures of these monomers; where $n_a$ number of repeat units which are derived from polyolefin-based macromonomers of the type a in the comb polymer molecule; where '$n_b$' is the number of repeat units which are derived from low molecular weight monomers selected from the group consisting of styrene monomers having from 8 to 17 carbon atoms, alkyl(meth)acrylates having from 1 to 10 carbon atoms in the alcohol group, vinyl esters having from 1 to 11 carbon atoms in the acyl group, vinyl ethers having from 1 to 10 carbon atoms in the alcohol group, (di)alkyl fumarates having from 1 to 10 carbon atoms in the alcohol group, (di)alkyl maleates having from 1 to 10 carbon atoms in the alcohol group, and mixtures of these monomers, of type b in the comb polymer molecule.

2. Use according to Claim 1 wherein the viscosity of the lubricating composition is the kinematic viscosity at 100°C measured using ASTM D445.

3. Use according to Claim 1 or 2 wherein the fatty acid alkyl ester is a fatty acid methyl ester.

4. Use according to claim 1 wherein the comb polymer has 11 to 26% by weight of the at least one repeat unit which is obtained from the at least one polyolefin-based macromonomer.

5. Use according to claim 1, wherein the at least one repeat unit which is obtained from the at least one polyolefin-based macromonomer has a number-average molecular weight in the range of 700 to 10000 g/mol.

6. Use according to claim 1 wherein the comb polymer comprises at least 90% by weight of repeat units which are obtained from at least one polyolefin-based macromonomer and from at least one low molecular weight monomer selected from the group consisting of styrene monomers having 8 to 17 carbon atoms, alkyl(meth)acrylates having 1 to 10 carbon atoms in the alcohol group, vinyl esters having from 1 to 11 carbon atoms in the acyl group, vinyl ethers having 1 to 10 carbon atoms in the alcohol group, (di)alkyl fumurates having 1 to 10 carbon atoms in the alcohol group, (di)alkyl maleates having 1 to 10 carbon atoms in the alcohol group and mixtures thereof.

7. Use according to claim 1 wherein the polydispersity index Mw/Mn is in the range of from 1 to 5.

8. Use according to claim 1 wherein the molar degree of branching of the comb polymer is in the range of from 0.4% to 1.0%, preferably in the range of from 0.4% to 0.6%.

9. Use according to claim 1 wherein the at least one repeat unit obtained from the at least one polyolefin-based macromonomer comprises a group, preferably at a level of at least 80% by weight of the at least one repeat unit obtained from the at least one polyolefin-based macromonomer, which is obtained from monomers selected from the group consisting of C2-C10 alkenes and C4-C10 alkadienes.

10. Use according to claim 1 wherein the melting point of the at least one repeat unit obtained from the at least one polyolefin-based macromonomers is less than or equal to 10°C.

11. Use according to claim 1 wherein no melting point of the at least one repeat unit obtained from the at least one polyolefin-based macromonomer is measured.

12. Use according to claim 1 wherein the comb polymer has repeat units, preferably in a proportion of at least 50% by weight, which are obtained from at least one or n-butyl methacrylate and n-butyl acrylate.

13. Use according to claim 1 wherein the comb polymer has repeat units which are obtained from styrene, preferably in a proportion in the range of from 5 to 25% by weight.

14. Use according to claim 1 wherein the comb polymer has repeat units which are obtained from alkyl(meth)acrylates having 11-30 carbon atoms in the alkyl radical, preferably in a proportion in the range of from 1 to 10% by weight.

15. Use according to any of the preceding Claims wherein the lubricating composition comprises from 0.1 wt% to 10 wt% of the comb polymer, by weight of the lubricating composition.

**Patentansprüche**

1. Verwendung eines Kammpolymers zur Verringerung des Viskositätsverlusts einer Schmiermittelzusammensetzung für das Kurbelgehäuse eines Verbrennungsmotors, wobei der Verbrennungsmotor mit einer Brennstoffzusammensetzung, die einen Fettsäurealkylester umfasst, betrieben wird,
wobei das Kammpolymer in der Hauptkette mindestens eine Wiederholungseinheit, die aus mindestens einem auf Polyolefin basierenden Makromonomer erhalten wird, und mindestens eine Wiederholungseinheit, die aus mindestens einem niedermolekularen Monomer aus der Gruppe bestehend aus Styrolmonomeren mit 8 bis 17 Kohlenstoffatomen, Alkyl-(meth)acrylaten mit 1 bis 10 Kohlenstoffatomen in der Alkoholgruppe, Vinylestern mit 1 bis 11 Kohlenstoffatomen in der Acylgruppe, Vinylethern mit 1 bis 10 Kohlenstoffatomen in der Alkoholgruppe, (Di)alkylfumaraten mit 1 bis 10 Kohlenstoffatomen in der Alkoholgruppe, (Di)alkyl-maleaten mit 1 bis 10 Kohlenstoffatomen in der Alkoholgruppe und Mischungen davon erhalten wird, umfasst,
wobei der molare Verzweigungsgrad im Bereich von 0,1 bis 10 Mol-% liegt;
wobei das Kammpolymer insgesamt mindestens 80 Ges.-%, bezogen auf das Gesamtgewicht der Wiederholungseinheiten des Kammpolymers, der mindestens einen Wiederholungseinheit, die aus dem mindestens einen auf Polyolefin basierenden Makromonomer erhalten wird, und der mindestens einen Wiederholungseinheit, die aus dem mindestens einen niedermolekularen Monomer erhalten wird, umfasst; wobei das Kammpolymer ein gewichtsmittleres Molekulargewicht im Bereich von 100.000 bis 500.000 g/mol aufweist;
wobei der molare Verzweigungsgrad $f_{Verzw.}$ anhand der folgenden Formel berechnet wird:

$$\int \mathrm{Verzw.} = \frac{\sum\limits_{a=1}^{A} n_a}{\sum\limits_{a=1}^{A} n_a + \sum\limits_{b=1}^{B} n_b}$$

wobei "A" für die Typenzahl an Wiederholungseinheiten, die von auf Polyolefin basierenden Makromonomeren abgeleitet sind, steht;

wobei "B" für die Typenzahl an Wiederholungseinheiten, die von niedermolekularen Monomeren aus der Gruppe bestehend aus Styrolmonomeren mit 8 bis 17 Kohlenstoffatomen, Alkyl-(meth)acrylaten mit 1 bis 10 Kohlenstoffatomen in der Alkoholgruppe, Vinylestern mit 1 bis 11 Kohlenstoffatomen in der Acylgruppe, Vinylethern mit 1 bis 10 Kohlenstoffatomen in der Alkoholgruppe, (Di)alkylfumaraten mit 1 bis 10 Kohlenstoffatomen in der Alkoholgruppe, (Di)alkyl-maleaten mit 1 bis 10 Kohlenstoffatomen in der Alkoholgruppe und Mischungen davon abgeleitet sind, steht; wobei $n_a$ für die Zahl an Wiederholungseinheiten, die von auf Polyolefin basierenden Makromonomeren abgeleitet sind, des Typs a im Kammpolymermolekül steht;

wobei "$n_b$" für die Zahl an Wiederholungseinheiten, die von niedermolekularen Monomeren aus der Gruppe bestehend aus Styrolmonomeren mit 8 bis 17 7 Kohlenstoffatomen, Alkyl(meth)acrylaten mit 1 bis 10 Kohlenstoffatomen in der Alkoholgruppe, Vinylestern mit 1 bis 11 Kohlenstoffatomen in der Acylgruppe, Vinylethern mit 1 bis 10 Kohlenstoffatomen in der Alkoholgruppe, (Di)alkylfumaraten mit 1 bis 10 Kohlenstoffatomen in der Alkoholgruppe, (Di)-alkylmaleaten mit 1 bis 10 Kohlenstoffatomen in der Alkoholgruppe und Mischungen davon abgeleitet sind, des Typs b im Kammpolymermolekül steht.

2. Verwendung nach Anspruch 1, wobei es sich bei der Viskosität der Schmiermittelzusammensetzung um die gemäß ASTM D445 gemessene kinematische Viskosität bei 100°C handelt.

3. Verwendung nach Anspruch 1 oder 2, wobei es sich bei dem Fettsäurealkylester um einen Fettsäuremethylester handelt.

4. Verwendung nach Anspruch 1, wobei das Kammpolymer 11 bis 26 Gew.-% der mindestens einen Wiederholungseinheit, die aus dem mindestens einen auf Polyolefin basierenden Makromonomer erhalten wird, aufweist.

5. Verwendung nach Anspruch 1, wobei die mindestens eine Wiederholungseinheit, die aus dem mindestens einen auf Polyolefin basierenden Makromonomer erhalten wird, ein zahlenmittleres Molekulargewicht im Bereich von 700 bis 10.000 g/mol aufweist.

6. Verwendung nach Anspruch 1, wobei das Kammpolymer mindestens 90 Gew.-% Wiederholungseinheiten, die aus mindestens einem auf Polyolefin basierenden Makromonomer und aus mindestens einem niedermolekularen Monomer aus der Gruppe bestehend aus Styrolmonomeren mit 8 bis 17 Kohlenstoffatomen, Alkyl(meth)acrylaten mit 1 bis 10 Kohlenstoffatomen in der Alkoholgruppe, Vinylestern mit 1 bis 11 Kohlenstoffatomen in der Acylgruppe, Vinylethern mit 1 bis 10 Kohlenstoffatomen in der Alkoholgruppe, (Di)alkylfumaraten mit 1 bis 10 Kohlenstoffatomen in der Alkoholgruppe, (Di)alkyl-maleaten mit 1 bis 10 Kohlenstoffatomen in der Alkoholgruppe und Mischungen davon erhalten werden, umfasst.

7. Verwendung nach Anspruch 1, wobei der Polydispersitätsindex Mw/Mn im Bereich von 1 bis 5 liegt.

8. Verwendung nach Anspruch 1, wobei der molare Verzweigungsgrad des Kammpolymers im Bereich von 0,4% bis 1,0%, vorzugsweise im Bereich von 0,4% bis 0,6% liegt.

9. Verwendung nach Anspruch 1, wobei die mindestens eine Wiederholungseinheit, die aus dem mindestens einen auf Polyolefin basierenden Makromonomer erhalten wird, eine Gruppe, vorzugsweise in einer Menge von mindestens 80 Gew.-% der mindestens einen Wiederholungseinheit, umfasst, die aus dem mindestens einen auf Polyolefin basierenden Makromonomer erhalten wird, die von Monomeren aus der Gruppe bestehend aus C2-C10-Alkenen und C4-C10-Alkadienen abgeleitet ist.

**EP 2 964 734 B1**

10. Verwendung nach Anspruch 1, wobei der Schmelzpunkt der mindestens einen Wiederholungseinheit, die aus dem mindestens einen auf Polyolefin basierenden Makromonomer erhalten wird, kleiner oder gleich 10°C ist.

11. Verwendung nach Anspruch 1, wobei kein Schmelzpunkt der mindestens einen Wiederholungseinheit, die aus dem mindestens einen auf Polyolefin basierenden Makromonomer erhalten wird, gemessen wird.

12. Verwendung nach Anspruch 1, wobei das Kammpolymer Wiederholungseinheiten, vorzugsweise in einem Anteil von mindestens 50 Gew.-%, aufweist, die von n-Butylmethacrylat und/oder n-Butylacrylat erhalten werden.

13. Verwendung nach Anspruch 1, wobei das Kammpolymer Wiederholungseinheiten, die aus Styrol erhalten werden, aufweist, vorzugsweise in einem Anteil von 5 bis 25 Gew.-%.

14. Verwendung nach Anspruch 1, wobei das Kammpolymer Wiederholungseinheiten, die aus Alkyl(meth)-acrylaten mit 11-30 Kohlenstoffatomen im Alkylrest erhalten werden, aufweist, vorzugsweise in einem Anteil von 1 bis 10 Gew.-%.

15. Verwendung nach einem der vorhergehenden Ansprüche, wobei die Schmiermittelzusammensetzung 0,1 bis 10 Ges.-% des Kammpolymers, bezogen auf das Gewicht der Schmiermittelzusammensetzung, umfasst.

**Revendications**

1. Utilisation d'un polymère en peigne pour la réduction de la perte de viscosité d'une composition lubrifiante pour le carter d'un moteur à combustion interne, le moteur à combustion interne étant alimenté avec une composition de carburant qui comprend un ester alkylique d'acide gras,
le polymère en peigne comprenant, dans la chaîne principale, au moins un motif répété qui est obtenu à partir d'au moins un macromonomère à base de polyoléfine et au moins un motif répété qui est obtenu à partir d'au moins un monomère de faible masse moléculaire choisi dans le groupe constitué par les monomères styréniques ayant 8 à 17 atomes de carbone, les (méth)acrylates d'alkyle ayant 1 à 10 atomes de carbone dans le groupe issu d'alcool, les esters vinyliques ayant de 1 à 11 atomes de carbone dans le groupe acyle, les éthers de vinyle ayant 1 à 10 atomes de carbone dans le groupe issu d'alcool, les fumarates d'alkyle ou de dialkyle ayant 1 à 10 atomes de carbone dans le groupe issu d'alcool, les maléates d'alkyle ou de dialkyle ayant 1 à 10 atomes de carbone dans le groupe issu d'alcool et les mélanges de ceux-ci,
le degré molaire de ramification étant dans la plage de 0,1 à 10 % en mole ;
le polymère en peigne comprenant un total d'au moins 80 % en poids, par rapport au poids total des motifs répétés du polymère en peigne, de l'au moins un motif répété qui est obtenu à partir de l'au moins un macromonomère à base de polyoléfine et de l'au moins un motif répété qui est obtenu à partir de l'au moins un monomère de faible masse moléculaire ;
le polymère en peigne ayant une masse moléculaire moyenne en poids dans la plage de 100 000 à 500 000 g/mol ;
le degré molaire de ramification, $f_{branch}$, étant calculé par la formule :

$$f\,\text{branch} = \frac{\displaystyle\sum_{a=1}^{A} n_a}{\displaystyle\sum_{a=1}^{A} n_a + \sum_{b=1}^{B} n_b}$$

où

« A » est le nombre de types de motifs répétés qui sont issus de macromonomères à base de polyoléfines ;
« B » est le nombre de types de motifs répétés qui sont issus de monomères de faible masse moléculaire choisis dans le groupe constitué par les monomères styréniques ayant de 8 à 17 atomes de carbone, les (méth)acrylates d'alkyle ayant de 1 à 10 atomes de carbone dans le groupe issu d'alcool, les esters vinyliques ayant de 1 à 11 atomes de carbone dans le groupe acyle, les éthers de vinyle ayant de 1 à 10 atomes de carbone dans le groupe issu d'alcool, les fumarates d'alkyle ou de dialkyle ayant de 1 à 10 atomes de carbone dans le groupe issu d'alcool, les maléates d'alkyle ou de dialkyle ayant de 1 à 10 atomes de carbone dans le groupe issu d'alcool et les mélanges de ces monomères ; « $n_a$ » est le nombre de motifs répétés qui sont issus de macromonomères à base de polyoléfines du type a dans la molécule de polymère en peigne ;

« $n_b$ » est le nombre de motifs répétés qui sont issus de monomères de faible masse moléculaire choisis dans le groupe constitué par les monomères styréniques ayant de 8 à 17 atomes de carbone, les (méth)acrylates d'alkyle ayant de 1 à 10 atomes de carbone dans le groupe issu d'alcool, les esters vinyliques ayant de 1 à 11 atomes de carbone dans le groupe acyle, les éthers de vinyle ayant de 1 à 10 atomes de carbone dans le groupe issu d'alcool, les fumarates d'alkyle ou de dialkyle ayant de 1 à 10 atomes de carbone dans le groupe issu d'alcool, les maléates d'alkyle ou de dialkyle ayant de 1 à 10 atomes de carbone dans le groupe issu d'alcool et les mélanges de ces monomères, de type b dans la molécule de polymère en peigne.

2. Utilisation selon la revendication 1, la viscosité de la composition lubrifiante étant la viscosité cinématique à 100 °C mesurée à l'aide de la méthode ASTM D445.

3. Utilisation selon la revendication 1 ou 2, l'ester alkylique d'acide gras étant un ester méthylique d'acide gras.

4. Utilisation selon la revendication 1, le polymère en peigne ayant 11 à 26 % en poids de l'au moins un motif répété qui est obtenu à partir de l'au moins un macromonomère à base de polyoléfine.

5. Utilisation selon la revendication 1, l'au moins un motif répété qui est obtenu à partir de l'au moins un macromonomère à base de polyoléfine ayant une masse moléculaire moyenne en nombre dans la plage de 700 à 10 000 g/mol.

6. Utilisation selon la revendication 1, le polymère en peigne comprenant au moins 90 % en poids de motifs répétés qui sont obtenus à partir d'au moins un macromonomère à base de polyoléfine et à partir d'au moins un monomère de faible masse moléculaire choisi dans le groupe constitué par les monomères styréniques ayant 8 à 17 atomes de carbone, les (méth)acrylates d'alkyle ayant 1 à 10 atomes de carbone dans le groupe issu d'alcool, les esters vinyliques ayant de 1 à 11 atomes de carbone dans le groupe acyle, les éthers de vinyle ayant 1 à 10 atomes de carbone dans le groupe issu d'alcool, les fumarates d'alkyle ou de dialkyle ayant 1 à 10 atomes de carbone dans le groupe issu d'alcool, les maléates d'alkyle ou de dialkyle ayant 1 à 10 atomes de carbone dans le groupe issu d'alcool et les mélanges de ceux-ci.

7. Utilisation selon la revendication 1, l'indice de polydispersité Mw/Mn étant dans la plage de 1 à 5.

8. Utilisation selon la revendication 1, le degré molaire de ramification du polymère en peigne étant dans la plage de 0,4 % à 1,0 %, de préférence dans la plage de 0,4 % à 0,6 %.

9. Utilisation selon la revendication 1, l'au moins un motif répété obtenu à partir de l'au moins un macromonomère à base de polyoléfine comprenant un groupe, de préférence à hauteur d'au moins 80 % en poids de l'au moins un motif répété obtenu à partir de l'au moins un macromonomère à base de polyoléfine, qui est obtenu à partir de monomères choisis dans le groupe constitué par les alcène en C2-C10 et les alcadiènes en C4-C10.

10. Utilisation selon la revendication 1, le point de fusion de l'au moins un motif répété obtenu à partir de l'au moins un macromonomère à base de polyoléfine étant inférieur ou égal à 10 °C.

11. Utilisation selon la revendication 1, aucun point de fusion de l'au moins un motif répété obtenu à partir de l'au moins un macromonomère à base de polyoléfine n'étant mesuré.

12. Utilisation selon la revendication 1, le polymère en peigne ayant des motifs répétés, de préférence en une proportion d'au moins 50 % en poids, qui sont obtenus à partir d'au moins l'un du méthacrylate de n-butyle et de l'acrylate de n-butyle.

13. Utilisation selon la revendication 1, le polymère en peigne ayant des motifs répétés qui sont obtenus à partir de styrène, de préférence en une proportion dans la plage de 5 à 25 % en poids.

14. Utilisation selon la revendication 1, le polymère en peigne ayant des motifs répétés qui sont obtenus à partir de (méth)acrylates d'alkyle ayant 11-30 atomes de carbone dans le radical alkyle, de préférence en une proportion dans la plage de 1 à 10 % en poids.

**15.** Utilisation selon l'une quelconque des revendications précédentes, la composition lubrifiante comprenant de 0,1 % en poids à 10 % en poids du polymère en peigne, par rapport au poids de la composition lubrifiante.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20100190671 A
- EP 0776959 A
- EP 0668342 A
- WO 9721788 A
- WO 0015736 A
- WO 0014188 A
- WO 0014187 A
- WO 0014183 A
- WO 0014179 A
- WO 0008115 A

- WO 9941332 A
- EP 1029029 A
- WO 0118156 A
- WO 0157166 A
- US 20080194443 A
- WO 2007045629 A
- EP 1058720 B1
- WO 9826030 A
- WO 02070631 A

**Non-patent literature cited in the description**

- Kirk-Othmer Encyclopedia of Chemical Technology. vol. 14, 477-526